# EUROPEAN PATENT SPECIFICATION

(11) **EP 1 924 114 B1**
(45) Date of publication and mention of the grant of the patent: **18.11.2015**
(21) Application number: 07016873.7
(22) Date of filing: 28.08.2007
(51) Int. Cl.: H04W 36/32, H04W 92/20

(54) **Wireless access point operation based upon historical information**
Betrieb eines drahtlosen Zugangspunktes auf der Basis von Verlaufsinformationen
Opération de point d'accès sans fil basé sur des informations historiques

(30) Priority: 20.11.2006 US 860182 P; 22.01.2007 US 656258
(43) Date of publication of application: 21.05.2008
(73) Proprietor: Broadcom Corporation, Irvine, CA 92617 (US)
(72) Inventor: Bennett, James D., San Clemente, CA 92672 (US); Karaoguz, Jeyhan, Irvine, CA 92606 (US)
(74) Representative: Jehle, Volker Armin

(56) References cited:
- WO-A1-01/35586
- WO-A1-99/56476
- WO-A1-2004/040933
- WO-A1-2005/025260
- WO-A1-2005/064969
- WO-A2-01/58182
- WO-A2-2005/011134

## Description

### BACKGROUND

### 1. Technical Field

The present invention relates to wireless communications and, more particularly, to circuitry for wireless local area networks.

### 2. Related Art

Communication systems are known to support wireless and wire lined communications between wireless and/or wire lined communication devices. Such communication systems range from national and/or international cellular telephone systems to the Internet to point-to-point in-home wireless networks. Each type of communication system is constructed, and hence operates, in accordance with one or more propriety or industry communication standards. For instance, wireless communication systems may operate in accordance with one or more standards, including, but not limited to, IEEE 802.11 and 802.16, Bluetooth, advanced mobile phone services (AMPS), digital AMPS, global system for mobile communications (GSM), code division multiple access (CDMA), local multi-point distribution systems (LMDS), multi-channel-multi-point distribution systems (MMDS), and/or variations thereof.

Depending on the type of wireless communication system, a wireless communication device, such as a cellular telephone, two-way radio, personal digital assistant (PDA), personal computer (PC), laptop computer, home entertainment equipment, or other wireless endpoint device, communicates directly or indirectly with other wireless communication devices. For direct communications (also known as point-to-point communications), the participating wireless communication devices tune their receivers and transmitters to the same channel or channels (e.g., one of a plurality of radio frequency (RF) carriers of the wireless communication system) and communicate over that channel(s). For indirect wireless communications, each wireless communication device communicates directly with an associated base station (e.g., for cellular services) and/or an associated access point (e.g., for an in-home or in-building wireless network) via an assigned channel.

Access points typically provide upstream pathways toward a backbone network. They also often manage downstream communication. Access points and base stations may be combined with other device circuitry, such as in set top boxes and in some cases within end point devices themselves. To complete a communication connection between the wireless communication devices, the associated base stations and/or associated access points communicate with each other directly, via a system controller, via a public switch telephone network (PSTN), via the Internet, and/or via some other wide area network.

Each wireless communication device includes a built-in radio transceiver (i.e., receiver and transmitter) or is coupled to an associated radio transceiver (e.g., a station for in-home and/or in-building wireless communication networks, RF modem, etc.). As is known, the transmitter includes a data modulation stage, one or more intermediate frequency stages, and a power amplifier stage. The data modulation stage converts raw data into baseband signals in accordance with the particular wireless communication standard. The one or more intermediate frequency stages mix the baseband signals with one or more local oscillations to produce RF signals. The power amplifier stage amplifies the RF signals prior to transmission via an antenna.

One particular device that includes such radio circuitry is the wireless access point that is operable to provide wireless access to a network such as the Internet for a wireless terminal, for example, a desktop computer with wireless radio or a wireless terminal (collectively, wireless terminal). Examples of wireless terminals with wireless radios (Bluetooth or WLAN, for example) also include laptop computers, personal digital assistants, cellular handsets having GPS based specialty application devices (e.g., mapping applications, golfing applications, fishing applications, etc.).

Typically, a wireless access point includes firewall circuitry to provide protection for the wireless terminals to prevent hackers from accessing private data within the wireless terminal. Generally, though, wireless access points support I.E.E.E. 802.11 protocol communications but act as a conduit for the communications between a wireless terminal and remote devices operably coupled to the wireless access point by way of a network such as the Internet. Typically, a wireless access point generates a beacon to identify itself to any wireless terminal within range of the beacon. The wireless terminal then selects an access point for attachment from all wireless access points whose beacons have been received.

In many current wireless infrastructures, a user (via their wireless device) must monitor, select and reselect an access point from a list of access points to establish a communication pathway to a backbone network such as the Internet. Not only is this inconvenient, but may result in interruption of data communications if a communication link for an attached wireless access point diminishes to a point that it is unusable from a final position for a wireless terminal that initiates attachment from one position but moves to a second position. Moreover, when a wireless device roams, such inconveniences are amplified. For example, a user may travel on foot, by car, by train or otherwise while using a wireless device. As the user travels out of range of a currently selected wireless access point, signal strength begins to fade leading to poor communication flow followed by detachment. At that point, the user may be forced to select from a plurality of wireless access points in that vicinity. Often, because the user is unable to determine which wireless access point would provide the best uninterrupted coverage as the user continues their travels, a wireless access point that provides inferior support over a short duration might be selected, resulting in more frequent interaction by the user with his or her wireless device to select alternate wireless access points.

Users are creatures of habit, and typically travel the same paths (sidewalks, streets, train tracks, etc.) daily. On such frequently traversed paths, users are forced again and again to interact with their wireless devices to select and manage associations with the wireless access points that they repeatedly encounter on the way.

WO 01/58182 A2 discloses a method of using historic data from previous calls made from mobile terminals within a wireless communications network to predict future call management options to maximize quality. The method may include determining a route traveled by a mobile terminal in a mobile communication network by determining the geographic position of the mobile terminal at a plurality of time instants as the mobile terminal is moving within the network.

WO 01/35586 A1 discloses a method and apparatus for facilitating network controlled handover in a wireless network employing packet switching and use of shared resource, such as timeslots, and provides network element controlled handover of a mobile unit, such as by a base station system, by providing packet routing for a plurality of mobile units to facilitate handover of at least one mobile unit.

WO2005/025260 A1 discloses a method for handover in heterogeneous cellular networks, based on context information, including position history, movement and movement prediction, load of the user terminal and of the network, and avaialble capabilities of the access points.

Other problems and deficiencies of such art and other related art will become apparent to one of skill in the art after comparison of such art with the various aspects of the present invention as set forth herein and with reference to the various figures.

### SUMMARY OF THE INVENTION

The present invention is directed to apparatus and methods of operation that are further described in the following Brief Description of the Drawings, the Detailed Description of the Invention, and the claims.

The features and advantages of the present invention will become apparent from the following detailed description of the invention made with reference to the accompanying drawings.

### BRIEF DESCRIPTION OF THE DRAWINGS

A better understanding of the present invention can be obtained when the following detailed description of the preferred embodiment is considered with the following drawings, in which:
Figure 1 is a functional block diagram illustrating a communication network that illustrates that includes circuit devices and network elements and operation thereof according to some aspects of the embodiment of the invention including wireless access points that maintain and exchange historical information of wireless terminals;
Figure 2 is a diagram of a wireless network operation according to one embodiment of the present invention of at least a portion the network of Figure 1;
Figure 3 is an alternate exemplary diagram of a wireless communication network that comprises at least a portion of the network of Figure 1;
Figure 4 is a functional block diagram illustrating an additional aspect of the embodiments of the present invention that show a super service area that overlaps a plurality of traditional service areas of wireless access points;
Figure 5 is a functional block diagram of a wireless access point such as those used in Figures 1-4 formed according to one embodiment of the present invention; and
Figures 6-9 are flow charts illustrating methods of operation of the wireless access points of the various embodiments of the present invention.

### DETAILED DESCRIPTION OF THE DRAWINGS

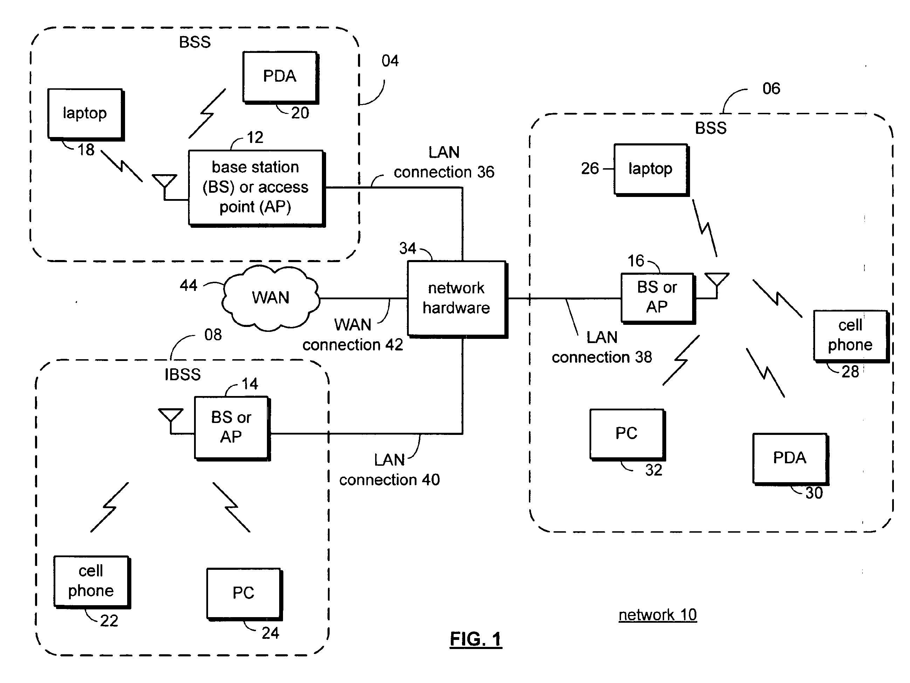

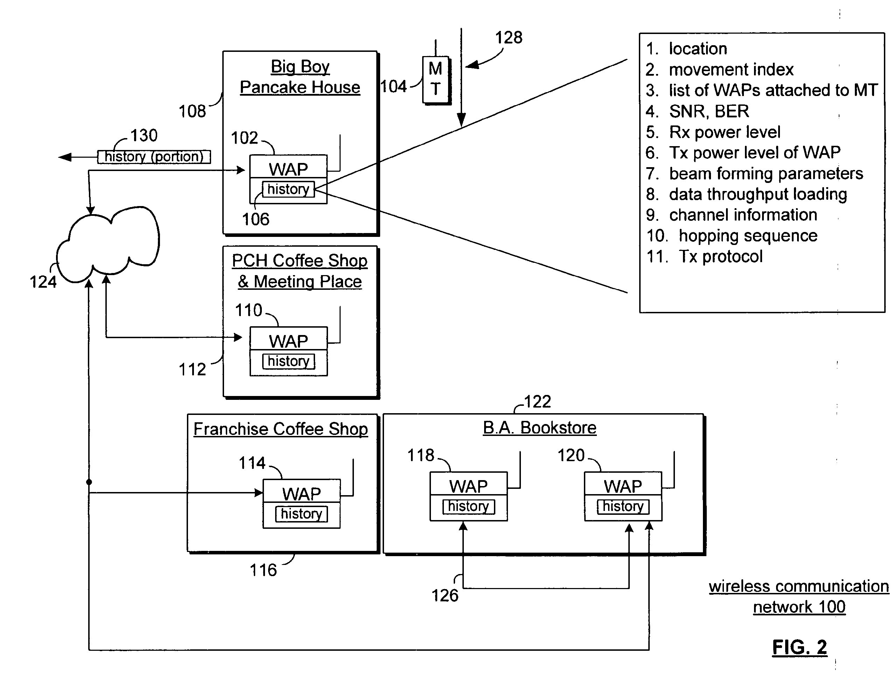

Figure 1 is a functional block diagram illustrating a communication system that includes circuit devices and network elements and operation thereof according to one embodiment of the invention. More specifically, a plurality of network service areas 04, 06 and 08 are a part of a network 10. Network 10 includes a plurality of base stations or access points (APs) 12-16, a plurality of wireless communication devices 18-32 and a network hardware component 34. The wireless communication devices 18-32 may be laptop computers 18 and 26, personal digital assistants 20 and 30, personal computers 24 and 32 and/or cellular telephones 22 and 28. The details of the wireless communication devices will be described in greater detail with reference to Figures 2-10.

The base stations or APs 12-16 are operably coupled to the network hardware component 34 via local area network (LAN) connections 36, 38 and 40. The network hardware component 34, which may be a router, switch, bridge, modem, system controller, etc., provides a wide area network (WAN) connection 42 for the communication system 10 to an external network element such as WAN 44. Each of the base stations or access points 12-16 has an associated antenna or antenna array to communicate with the wireless communication devices in its area. Typically, the wireless communication devices 18-32 register with the particular base station or access points 12-16 to receive services from the communication system 10. For direct connections (i.e., point-to-point communications), wireless communication devices communicate directly via an allocated channel.

Typically, base stations are used for cellular telephone systems and like-type systems, while access points are used for in-home or in-building wireless networks. Regardless of the particular type of communication system, each wireless communication device includes a built-in radio and/or is coupled to a radio.

Generally, a wireless access point wireless access point of Figure 1 is operable to generate and update a history for wireless terminals. Generally, such a history is generated or updated upon either attaching to a wireless terminal, receiving an attachment request, a beacon or position information from the wireless terminal, or from receiving historical information about the wireless terminal from another wireless access point. The wireless access point is further operable determine whether to attach to a wireless terminal, whether another wireless access point should attach to a wireless terminal or whether to hand-off a wireless terminal to another wireless access point.

Figure 2 is a diagram of a wireless communication network according to one embodiment of the present invention. A wireless communication network 100 includes a plurality of wireless access points that are operably connected to exchange history information regarding one or more wireless terminals. Such history is used to make handoff decisions between the wireless access points and the wireless terminals. More specifically, Wireless Access Point wireless access point 102 includes circuitry for establishing a point-to-point communication link with a wireless terminal 104 and to generate a history or to update a history relating to wireless terminal 104.

Wireless access point 102 is connected by a wired backbone network 124 to wireless access points 110, 114, and 120. Further, wireless access point 120 is operably connected to wireless access point 118 by wired backbone network 126. In one embodiment, wired backbone network 124 comprises a local area network. In an alternate embodiment, network 124 comprises a plurality of wireless access points operably coupled through the Internet. For example, a virtual private network (VPN) may be established to create the backbone network 124. In yet another embodiment, network 124 may comprise a wireless network comprising wireless communication links that provide control and cooperative communications to support operations according to the various aspects of the embodiments of the invention illustrated by Figures 1-9 herein. Similarly, backbone network 126 may comprise a wired or wireless backbone network as described for network 124. Thus, wireless access point 120 operably couples wireless access point 118 to the wireless access points of network 124 to support operation according to the various aspects of the embodiments of the invention. For example, wireless access point 118 is operable to exchange historical information with wireless access point 102 by way of wireless access point 120.

If wireless access point 102 does not have a history for wireless terminal 104 upon receiving either a beacon or attachment request from wireless terminal 104, wireless access point 102 is operable to generate said history upon attaching to wireless terminal 104. On the other hand, if wireless access point 102 already has a stored history, for example, a history 106, then wireless access point 102 is operable to update history 106 based upon any new data received directly from wireless terminal 104 or data relating to the communication link with wireless terminal 104. For example, wireless access point 102 is operable to update position information every time wireless terminal 104 transmits position information to wireless access point 102. Additionally, wireless access point 102 is operable to update history 106 based upon changed communication channel characteristics or signal characteristics for signals received from wireless terminal 104. Finally, wireless access point 102 is operable to update history 106 whenever wireless access point 102 receives history information from another wireless access point either through an external network, such as the Internet, or through an intranet, a wireless local area network, or a wired local network.

In one embodiment of the present invention, history 106 includes at least some of the following types of history: position, a movement index, a list of wireless access points attached to the wireless terminal in relation to an average amount of time at an area served by each wireless access point within the list of wireless access points and, further, in relation to a stored position of the wireless terminal while serviced by such wireless access points. The history further includes signal characteristics for communication links between the wireless terminal and the wireless access point at the various positions, including characteristics such as signal-to-noise ratio (SNR) or bit error rate (BER). Further, the history can include the receive power level as recorded by a wireless access point attached to the wireless terminal, a transmit power level of the wireless access point for the communication link to the wireless terminal, beam forming parameters, data throughput loading (typical or average), channel information, a hopping sequence and a transmission protocol.

Within network 100, wireless access point 102 is located within a position 108, for example, which is shown as Big Boy Pancake House. A wireless access point 110 is located within position 112, for example, which is shown to be the PCH Coffee Shop & Meeting Place. Wireless access point 114 is located within position 116, for example, which is shown as the Franchise Coffee Shop. Finally, wireless access points 118 and 120 are within position 122, for example, which is shown as the B.A. Bookstore. Wireless access points 102, 110, 114 and 120 are all operably disposed to communicate with each other by way of a network 124. In the present example, network 100 comprises the Internet, though it could easily be an intranet within a complex. Further, within position 122, wireless access points 118 and 120 are operably connected by way of a local area network 126.

In operation, wireless terminal 104 appears within a service area of wireless access point 102 and is moving in a direction 128. In one embodiment of the present invention, wireless terminal 104 generates an attachment request to wireless access point 102. This attachment request results from the wireless terminal 104 detecting a beacon transmitted by wireless access point 102 identifying wireless access point 102 as able to support an attached communication. In this embodiment of the invention, wireless terminal 104 also transmits to wireless access point 102 a position of wireless terminal 104. Further, in the described embodiment of the invention, wireless terminal 104 transmits the position on a periodic basis either driven by specified events or by a specified schedule.

Wireless access point 102, in response to receiving position information from the wireless terminal 104 is operate to store movement history of the wireless terminal for subsequent evaluation as a part of reaching first conclusion to attach to the wireless terminal and a second conclusion to prompt the wireless terminal and another wireless access point to attach to each other. Alternatively, wireless access point 102 is operable to calculate a movement index that may be updated with position information of the wireless terminal wherein the movement index is used to form the first and second conclusions regarding attachment. For example, in one embodiment, the movement index is stored in relation to every wireless access point to which the wireless terminal had attached. The movement index therefore reflects a value that identifies a likelihood that the wireless terminal will remain stationary within a service area of that wireless access point. In one embodiment, the movement index reflects a percentage of time that a wireless terminal remains attached to a specified wireless access point of a group of closely affiliated wireless access points that are proximate to the wireless access point forming the attachment and hand-off decisions.

Alternatively, wireless terminal 104 transmits a beacon to wireless access point 102 instead of an attachment request followed by position information after attachment. Here,the beacon includes a position of the wireless terminal. For either embodiment, wireless access point 102 is operable to generate or update history 106 for wireless terminal 104 upon the beacon and the position. Generally, in response to receiving the attachment request or beacon from wireless terminal 104, wireless access point 102 is operable to determine whether to attach to wireless terminal 104 or to prompt wireless terminal 104 to attach to another wireless access point. This determination also includes forming the first conclusion to attach to the wireless terminal or forming the second conclusion to prompt the wireless terminal and another wireless access point to attach to each other. For example, wireless access point 102 may evaluate the movement index which is generated, in one embodiment, in relation to each position (wireless access point service area or wireless access point) identified within the history 106.

As such, wireless access point 102 may readily determine the most appropriate wireless access point that should attach to the wireless terminal 104 to reduce network inefficiencies that may result from handoffs from one wireless access point to another wireless access point. In another embodiment of the invention, wireless access point 102 may merely evaluate history 106 to determine a relative amount of time or amount of time that the wireless terminal remained attached to each wireless access point. For example, if wireless terminal 104 could readily attach to any of the wireless access points shown here in Figure 2, namely, wireless access points 102, 110, 114, 118 and 120, or any subset of these wireless access points, based on being within overlapping service areas of these wireless access points, wireless access point 102 may evaluate which wireless access point would most likely become the primary service area for the wireless terminal.

For example, if wireless terminal 104 typically moves through the service areas of wireless access points 102, 110, 114 and 118, to finally stop within the service are of wireless access point 120, wireless access point 102 may determine that wireless access point 120 would be the most appropriate wireless access point for servicing an attached communication link with wireless terminal 104. Alternatively, wireless access point 102 may determine that any of the wireless access points could readily service the attached communication link for wireless terminal 104 but that wireless terminal 104 has historical loading requirements that may be better supported by a particular wireless access point. For example, within position 122, one of the two wireless access points 118 and 120 may be better suited for supporting large data downloads. For example, wireless access point 120 may be particularly suited for downloading audio books over a wireless communication link.

Regardless of the attachment decision made by wireless access point 102, namely, whether it forms a first conclusion to attach or a second conclusion to prompt the wireless terminal 104 to attach to another wireless access point, wireless access point 102 is operable to transmit at least a portion of history 106 to each of the other wireless access points either through the network 124 or through a local area network, such as local area network 126. While not specifically shown herein, for example, each of the wireless access points 102, 110, 114, 118 and 120, is operable to update history 106 whenever it receives history information or a history portion from any of the other wireless access points.

Wireless access point 102 may also make attachment decisions based upon its current loading and the operational capabilities of wireless terminal 104. For example, if wireless terminal 104 is operable to communicate using newer versions of wireless communication protocols including, for example, Orthogonal Frequency Division Multiplexing (OFDM) communication protocols, wireless access point 102 may determine that it would be better for another wireless access point to provide the attached communication link to wireless terminal 104. For example, if wireless access point 102 is OFDM-capable, as is wireless terminal 104, wireless access point 102 may prefer, based upon its loading, to prompt wireless terminal 104 and wireless access point 120 to establish an attached communication link.

Wireless access point 102 is also operable to assign an operational characteristic comprising at least one of a channel, a transmission power level, a transmission protocol, or a radio of a plurality of radios within the transceiver of the wireless access point. For example, a specified radio with wireless access point 102 may be reserved for specified types of communications.

Alternatively, if another wireless access point is able to support a better channel with less interference, wireless access point 102 may defer to such wireless access point for supporting the attached communication link with wireless terminal 104. Wireless access point 102 is operable to store signal and communication characteristics of communications with each wireless terminal in a history for each wireless terminal. Such characteristics include signal-to-noise ratio (SNR), a bit error rate (BER), a received power level, a transmitted power level, beam forming parameters, channel information, a hopping sequence, and a transmission protocol. As such, wireless access point 102 is operable to reach the first and second conclusions based upon current communication characteristics of the wireless terminal in relation to its history and in relation to communication characteristics of other wireless terminals to avoid conflict. For example, wireless access point 102 maybe aware that a wireless terminal in a neighboring wireless access point service area is using a specified communication characteristic that could create a conflict if the two wireless terminals were to move into proximity with each other. Such and evaluation may also be made in relation to a movement history or movement index.

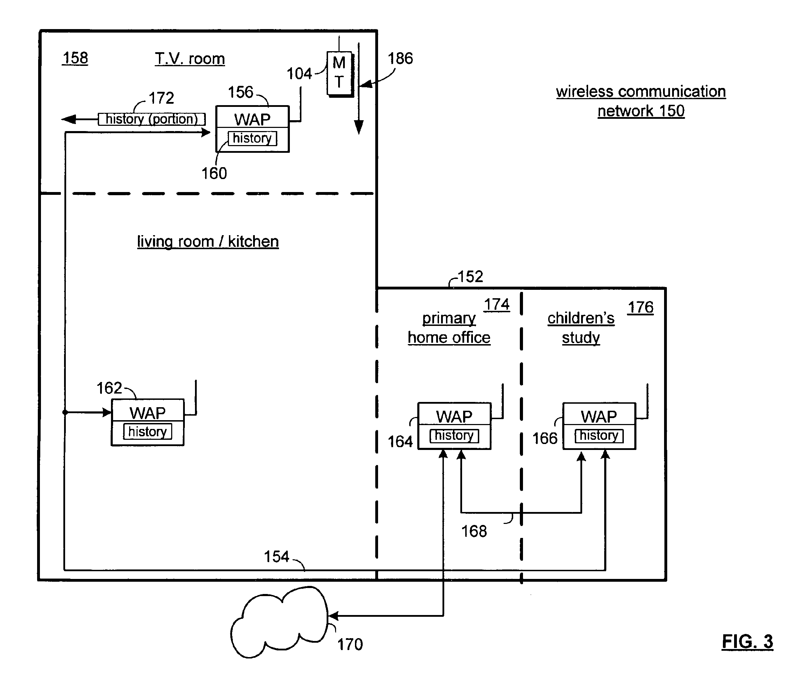

Figure 3 is an alternate exemplary diagram of a wireless communication network 150. In the exemplary diagram of Figure 3, wireless communication network 150 includes a structure 152 that includes a plurality of wireless access points that are operably disposed to communicate over a backbone network 154. More specifically, a wireless access point 156 is connected to wireless access points 162 and 166 by way of a backbone network 154. Network 154 may be a wired local area network or a wireless network. In the described embodiment, network 154 is a wired local area network. Further, wireless access point 166 is connected to wireless access point 164 by way of a network 168 which may be a wired or wireless local area network. Wireless access point 164 is further connected to an external network by way of the Internet or other network 170. In terms of connectivity, for example, wireless access point 156 may communicate with an external wireless access point by way of wireless access point 166, wireless access point 164, and network 170 to exchange operational information relating to a wireless terminal.

Here in Figure 3, a wireless access point 156 is within a position 158 which is identified as the T.V. room of structure 152. For example, structure 152 may be a residence. Wireless access point 156 includes a history 160 that is formed and updated as described before in relation to Figure 2. The updated history 160 then is used to generate history portion 172 for transmission to wireless access points 162, 166 and 164 to update their history of wireless terminal 104.

Because wireless access points 164 and 166 are further connected by a second local area network 168, any exchange of operational information or history with wireless access point 164 includes such information or history being conducted to/from and/or through wireless access point 166 according to the origination/destination of the information or history. Finally, as may be seen, wireless access point 164 is operably disposed to communicate over an external network 170 which, in this example, is the Internet. Operation of the wireless communication network 150 is substantially similar to that of wireless communication network 100, but provides an alternate exemplary embodiment of the present invention. For example, if wireless terminal 104 generates an attachment request or a beacon to wireless access point 156, and is moving in a direction 186, as it usually does, wireless access point 156 may determine that either wireless access points 162, 164 or 166, would be the best wireless access point to provide an attached communication link with wireless terminal 104. For example, if the wireless terminal is one belonging to a parent that uses the primary home office identified as position 174, the history 160 would provide movement information in the form of a movement index or in the form of typical time values associated within each position of structure 152. As such, wireless access point 162 is operable to handoff MT 104 shortly after attaching to MT 104 after receiving an attachment request and attaching to MT 104.

In this example, if the history indicates if an ID of wireless terminal 104 and its' associated history that the wireless terminal typically spends most time in the position identified as a children's study, i.e., position 176, then wireless access point 156 may determine that wireless access point 166 should support the attached communication with wireless terminal 104. Thus, wireless access point 156 operates to handoff MT 104 to wireless access point 166. Finally, within the embodiment of Figure 3, while only wireless access point 164 is operable to communicate over Internet 170 to exchange a history portion 172 with other wireless access points, wireless access point 164 is operable to also transmit history portion 172 within wired local area network 154 to wireless access points 166, 162 and 156. Additionally, the history portion 172 generated by wireless access point 156, for example, may be received by wireless access point 164 and then transmitted out over Internet 170 to update history information of other wireless access points relating to wireless terminal 104.

In one embodiment, the history information is only sent to wireless access points identified within the history information associated with wireless terminal 104. Thus, as the attachment history grows because the wireless terminal attaches to new wireless access points, wireless access point the histories of the wireless access points are updated. In one embodiment of the present invention, a portion of the history is received by wireless access point 156 from wireless terminal 104, to wireless access point enable a new wireless access points to determine handoff. If the portion of the history has adequate information to make a handoff decision, the new wireless access point makes the determination and then updates historical information of identified wireless access points.

If the portion of the history is not adequate, but includes at least an identity of a wireless access point to which the wireless terminal had previously attached, the new wireless access point is operable to communicate with at least one identified wireless access point to receive historical information to make a handoff decision. Wireless access point Thus, for example, if wireless access point 156 is a new wireless access point and wireless access point 164 is identified by wireless terminal 104, then wireless access point 156 attaches to wireless terminal 104 and obtains historical information from wireless access point 164 by way of wireless access point 166 and networks 154 and 168.

In one embodiment, the wireless terminal merely tracks the ID of the wireless access points to which it previously attached. Accordingly, after wireless terminal 104 attaches with a wireless access point, it identifies the wireless access point or wireless access points stored within its memory to which it had previously attached. Accordingly, even if a wireless terminal supplies the ID of only one wireless access point to which it had previously attached, a new wireless access point to which the wireless terminal is presently attached is able to generate a history portion 172 for delivery to the identified wireless access point and to exchange historical information therewith.

The identified wireless access point, of course, would then have a history of the wireless terminal and wireless access points to which it had attached and would therefore would be able to add the newest wireless access point to that list even if the wireless terminal were in an entirely new area and had never communicated with that wireless access point before. As such, that same new wireless access point would be able to receive a complete history portion 172 identifying a plurality of wireless access points to enable that new wireless access point to make a handoff decision, namely, to form either the first or second conclusion as described before.

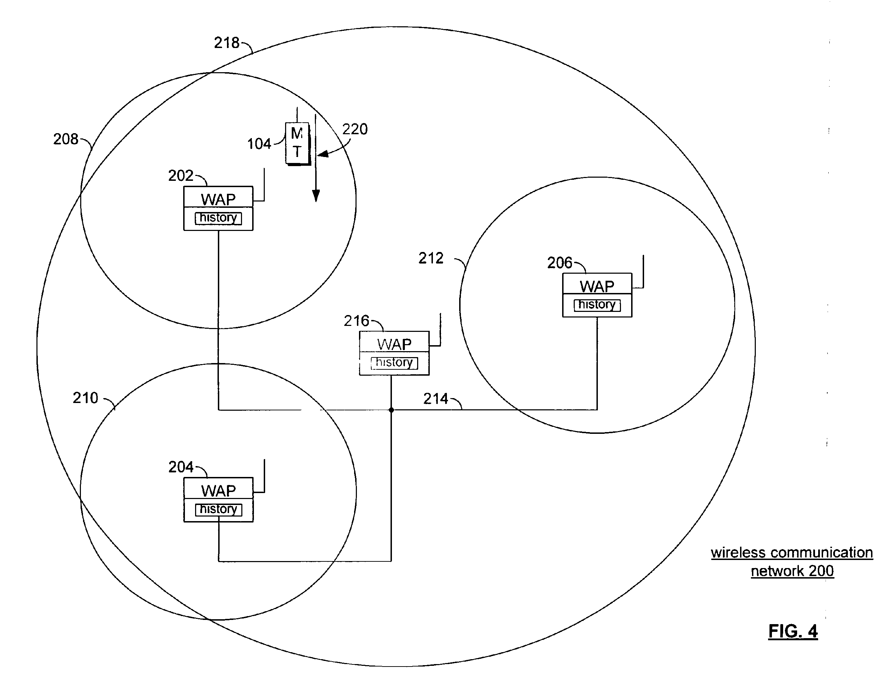

Figure 4 is a functional block diagram illustrating an additional aspect of the embodiments of the present invention. The diagram of Figure 4 may be combined with the diagrams of Figures 1, 2 and 3, for example. Generally, Figure 4 illustrates that a plurality of wireless access points may form service areas that are substantially exclusive of each other, while also being within the service area of another wireless access point that covers a much larger area. For example, a wireless network 200 of Figure 4 includes three wireless access points 202, 204 and 206, which support service areas 208, 210 and 212, respectively and which are connected by a network 214. Network 214 may be a wired or wireless local area network or virtual private network. Additionally, a wireless access point 216 is connected to network 21, and supports a super service area 218 that substantially overlaps the smaller traditional service areas 208, 210 and 212. Accordingly, one aspect of the present invention includes, in the case of Figure 4, where wireless terminal 104 travels into the service area 208 of wireless access point 202, traveling in a direction 220, whether to remain attached to wireless terminal 104, or whether to hand off wireless terminal 104 to one of wireless access points 204 or 206 or super service area wireless access point 214.

As may be seen, wireless terminal 104 is within super service area 218 and, for example, if a history of wireless terminals showed that a wireless terminal substantially moved around within super service area 218 without settling in one of the service areas 208, 210 or 212, then wireless access point 202 might determine that wireless access point 214 would be most appropriate to service wireless terminal 104. For exemplary purposes, one basis of a decision to allow wireless access point 214 to service wireless terminal 104 would be that wireless terminal 104 does not spend much time in any of the service areas 208, 210 or 212, because of constant movement. Alternatively, it may be that a position that wireless terminal 104 often does stop movement service areas 208, 210 and 212. Alternatively, in one embodiment, each wireless access point is operable to make handoff decisions based upon typical loading requirements of the wireless terminal in addition to probable movement or typical movement of the wireless access point.

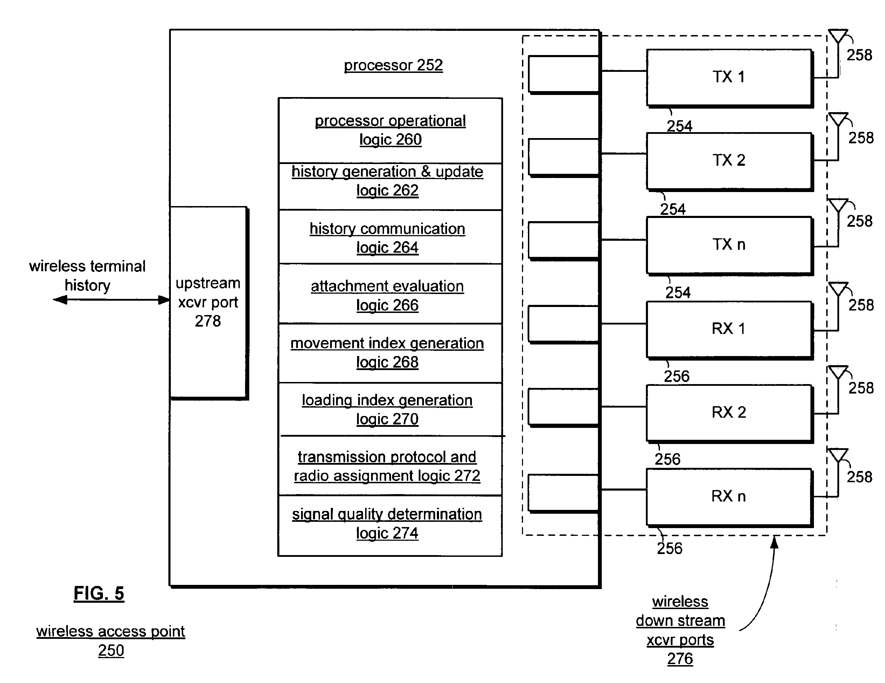

Figure 5 is a functional block diagram of a wireless access point formed according to one embodiment of the present invention. A wireless access point 250 includes a processor 252 that is operably disposed to transmit and receive over one or more antennas by way of one or more transmit and receive circuits. In the specific embodiment shown within Figure 5, wireless access point 250 includes a plurality of transmit circuits 254 used to transmit outgoing communication signals and an equivalent plurality of receive circuits 256 to receive ingoing communication signals. Each of the transmit and receive circuits 254 and 256 generally include radio front end circuitry for up-converting outgoing signals to RF and for down-converting ingoing RF signals to intermediate or baseband frequencies for subsequent processing. In one embodiment of the invention, wireless access point 250 is an OFDM-capable device and thus is operable to transmit high data rate communications by using the plurality of outgoing transmit paths to collectively transmit a communication signal. As such, high throughput/high data rate communications, such as streaming video, may be transmitted by wireless access point 250 for real-time applications.

Wireless access point 250, and more particularly, processor 252, includes operational logic to support routine operations as well as operations according to the various aspects and embodiments of the present invention. For example, processor 252 includes processor operational logic 260 which includes logic for routine access point operations, including the OFDM communications. Processor 252 further includes history generation and update logic 262 which generates and updates histories as described herein. Processor 252 also includes history communication logic 264 for transmitting at least a portion of a history to other wireless access points as described herein. Further, based on history stored within memory coupled to or associated with processor 252, processor 252 includes logic for forming the first and second attachment conclusions within attachment evaluation logic 266.

Processor 252 further includes movement index generation logic 268 for generating the movement index. Processor 252 further includes a loading index generation logic 270, transmission protocol and radio assignment logic 272, and signal quality determination logic 274, for operation as has been described elsewhere herein. Processor 252 is further operable to produce, though at least one output port, outgoing communication signals to transmit circuits 254 and to receive, though at least one input port, ingoing communication signals from receive circuits 256. Each downstream transceiver, ie., an output port and corresponding transmit circuit 254 or input port and corresponding receive circuit 256, is operable to support or service wireless communications with a wireless terminal. Moreover, according some communication protocols such as OFDM, a plurality of transceiver ports may be used to support or service a communication link with a single wireless transceiver.

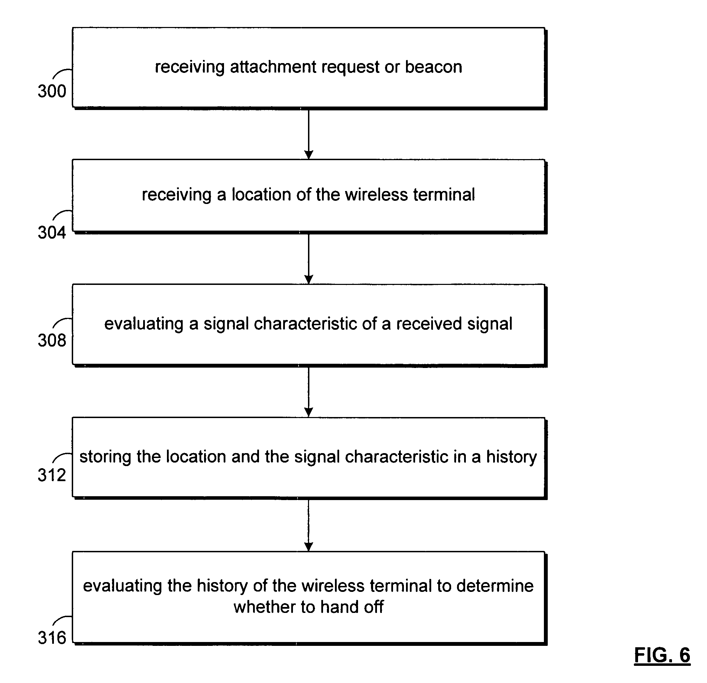

Another aspect of the embodiment of the present invention shown in Figure 6, which embodiment may be used in conjunction with any and all of the embodiments and aspects of the invention described in relation to all of the other figures herein, is that each of the transmit circuits 254 and receive circuits 256 are operable to transmit or receive signals, respectively, from individual antennas 258. It is understood, however, that a lesser number of antennas may be utilized when operatively coupled thereto through switching circuitry. Processor 252 is operably disposed to communicate with each of the transmit circuits 254 and receive circuits 256 by way of a plurality of down stream transceiver ports

Figure 6 is a flow chart illustrating a method according to one embodiment of the present invention. The method includes a wireless access point initially receiving one of an attachment request or a beacon from a wireless terminal (step 300). In the case where the wireless access point receives an attachment request, the wireless access point attaches to the mobile. In a case where the wireless access point receives a beacon, the wireless access point generates communication signals to the wireless terminal to provide attachment information. The method also includes receiving a position of the wireless terminal (step 304). The position may be received as a part of the attachment request or the beacon or as a separate signal. The position is then stored within a history of the wireless terminal whether the history is merely generated at that point or is merely updated with the new position information. Thereafter, the method includes evaluating a signal characteristic of a signal received from the wireless terminal (step 308) and storing the position and signal characteristic in a history of the wireless terminal (step 312).

Finally, the method includes evaluating the history of the wireless terminal to determine whether to remain attached to the wireless terminal for the embodiment in which the wireless access point received an attachment request or, the embodiment in which the wireless access point received a beacon, the method includes determining whether to generate a communication signal to prompt the wireless terminal and a second wireless access point to attach to each other (step 316). Stated differently, step 316 includes forming a first decision to attach to the wireless terminal or a second decision to prompt the wireless terminal and a second wireless access point to attach with each other. For the first embodiment in which the wireless access point received an attachment request, step 316 includes determining whether to handoff the wireless terminal to another wireless access point.

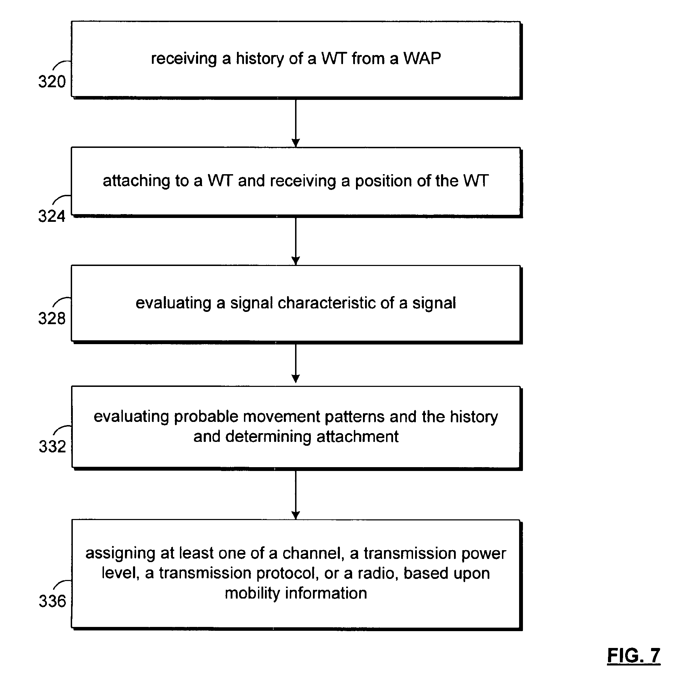

Figure 7 is a flow chart illustrating another method according to one embodiment of the present invention. The method of Figure 7 includes initially receiving at least a portion of a history of a wireless terminal (WT) from a wireless access point, the history including movement information and attachment history (step 320). The method also includes receiving an attachment request from a wireless terminal, attaching to the wireless terminal, and receiving a position of the wireless terminal (step 324). The method further includes evaluating a signal characteristic of a signal received from the wireless terminal (step 328) and evaluating probable movement patterns of the wireless terminal and attachment history and determining whether a different wireless access point should attach to the wireless terminal (step 332). In one embodiment, a movement indicator is used to rate the likelihood of movement of the wireless terminal for a given service area. Another embodiment of the invention merely includes assigning some type of parameter, for example, time, that is affiliated with the service area for each wireless access point to which the wireless terminal had attached. Any parameter may be sued that allows the wireless access point to determine, at least generally, whether the wireless terminal is likely to stay or to move to a different service area. Finally, the method includes assigning at least one of a channel, a transmission power level, a transmission protocol, or a radio, based upon movement (mobility) information and typical loading as a part of making attachment decisions (step 336).

For example, certain wireless access points and associated service areas may be better equipped or more appropriate for servicing a wireless access point that has a particular typical loading or throughput requirement. Alternatively, based on the history of the wireless access point, certain types of communication protocols or even radio types may be more appropriate than others. As such, a wireless access point receiving either a beacon or attachment request from a wireless terminal may evaluate the history of the wireless terminal to determine the most appropriate wireless access point and service area to service attached communications with the wireless access point.

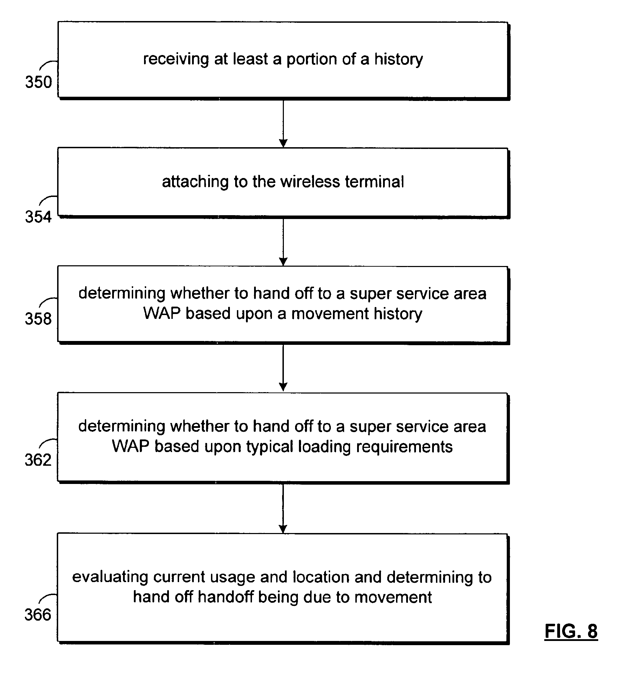

Figure 8 is a flow chart illustrating another method according to one embodiment of the present invention. Initially, the method includes receiving at least a portion of a history of the wireless terminal from a wireless access point or wireless terminal including at least one of movement information and attachment history of at least one wireless terminal (step 350). Thereafter, the method includes receiving one of an attachment request or a beacon from a wireless terminal, attaching to the wireless mobile terminal, and receiving a position of the wireless terminal (step 354). Thereafter, the method includes determining whether to handoff the wireless terminal to a local wireless access point or to a super service area wireless access point based upon movement information in relation to position (step 358). The movement information may be in a variety of forms. For example, the movement information may be in the form of a mapping of time spent per wireless access point service area in terms of a percentage or ratio or actual value over a certain window, in the form of a mobility index that is mapped in relation to specific service areas, or in any form that allows a wireless access point to roughly determine whether the wireless terminal is likely to stay or to pass through. In one embodiment, a mobility index is given one of a small plurality of ratings in relation to the specific service areas. For example, a "1" indicates the wireless terminal is very likely to move out of the present service area within a specified period, a "2" indicates that the wireless terminal is somewhat likely to leave within the specified period, and a "3" indicates that the wireless terminal is very likely to stay within the service area within a specified period. All variations for enabling the wireless access point to evaluate movement history are included.

As an alternate embodiment of the present invention, the wireless access point merely determines whether the wireless terminal should attach a local wireless access point (including itself as a possible candidate), or to a super service area wireless access point (including itself as a candidate-wireless access point), based upon other aspects recorded in the history associated with the wireless terminal. For example, this decision might be based on typical loading requirements of the wireless access point or positions to which the wireless access point travels that is within the super service area. Thus, an alternate method step includes determining whether to prompt the wireless terminal to attach to a local wireless access point or to a super service area wireless access point based upon typical loading requirements for the wireless terminal in relation to the wireless terminal's position (step 362).

Finally, as an additional aspect of the embodiments of the present invention, the method includes a step of evaluating current usage and position of a wireless terminal and determining whether to hand the wireless terminal off to a different wireless access point prior to a handoff being required due to wireless terminal movement and/or channel conflict and/or loading considerations (step 366). For example, if a wireless access point begins to move towards another service area, a serving or attached wireless access point is operable to decide that a handoff is appropriate before a need for such handoff exists in order to minimize an ongoing data transmission interference.

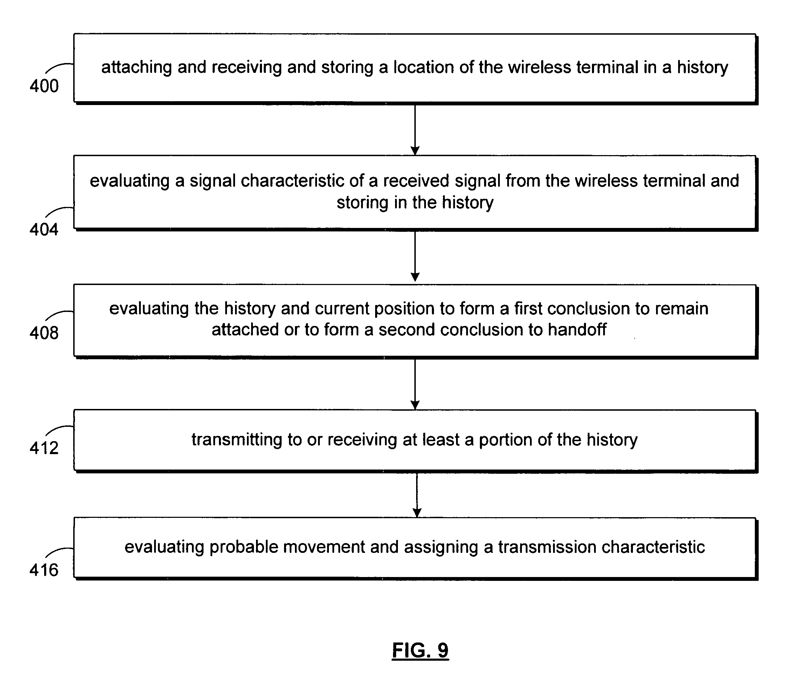

Figure 9 is a method according to yet another embodiment of the present invention. The method includes initially receiving one of an attachment request or a beacon from a wireless terminal and receiving and storing a position of the wireless terminal in a history associated with the wireless terminal (step 400). Thereafter, the method includes evaluating a signal characteristic of a signal received from the wireless terminal and storing the signal characteristic in the history of the wireless terminal (step 404).

The method also includes evaluating the history of the wireless terminal and the current position of the wireless terminal to form a first conclusion to remain attached to the wireless terminal or to form a second conclusion to generate a communication signal to prompt the wireless terminal and a second wireless access point to attach to each other, the history including at least one of movement history and a movement index (step 408). Stated differently, this step includes performing a handoff in a wireless local area network from one wireless access point to another. Thereafter, the method includes either transmitting to or receiving from the second wireless access point or from a third wireless access point wireless access point at least a portion of the history of the wireless terminal (step 412).

Finally, the method includes assigning at least one of a channel, a transmission power level, a transmission protocol, or a radio based upon the history of the wireless terminal, based upon movement information of the wireless terminal, and based upon typical loading requirements of the wireless terminal wherein the wireless access point evaluates probable movement patterns of the wireless terminal as a part of making attachment decisions and as a part of assigning at least one of a channel, a transmission power level, a transmission protocol, or a radio for communication with the wireless terminal (step 416).

As one of ordinary skill in the art will appreciate, the term "substantially" or "approximately", as may be used herein, provides an industry-accepted tolerance to its corresponding term and/or relativity between items. Such an industry-accepted tolerance ranges from less than one percent to twenty percent and corresponds to, but is not limited to, component values, integrated circuit process variations, temperature variations, rise and fall times, and/or thermal noise. Such relativity between items ranges from a difference of a few percent to magnitude differences.

As one of ordinary skill in the art will further appreciate, the term "operably coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled".

While the invention is susceptible to various modifications and alternative forms, specific embodiments thereof have been shown by way of example in the drawings and detailed description. It should be understood, however, that the drawings and detailed description thereto are not intended to limit the invention to the particular form disclosed, but, on the contrary, the invention is to cover all modifications, equivalents and alternatives falling within the spirit and scope of the present invention as defined by the claims. As may be seen, the described embodiments may be modified in many different ways without departing from the scope or teachings of the invention.

## Claims

1. A communication infrastructure comprising:
a first access point (102) having a first upstream transceiver and a first wireless downstream transceiver;
a second access point (110, 114, 118, 120) having a second upstream transceiver and a second wireless downstream transceiver;
a plurality of first wireless terminals that each deliver position related information to the second access point;
the second access point (110, 114, 118, 120) communicates the delivered position related information along with correlated operational information to the first access point (102) via the first upstream transceiver and the second upstream transceiver;
a second wireless terminal (104) that delivers further position related information to the first access point (102); and
the first access point (102) compares operational information associated with the second wireless terminal (104) with the delivered correlated operational information communicated from the second access point (110, 114, 118, 120) to perform hand off of the second wireless terminal (104) to another wireless access point;
wherein the delivered operation information includes movement information and further wherein a decision to perform handoff is based in part upon the movement information;
wherein the movement information includes historical information that includes attachment history of the second wireless terminal (104) in relation to duration for each attachment position;
wherein the wireless access points (102, 110, 114) are adapted to assign a transmission protocol based upon the history of the second wireless terminal (104) based upon movement information of the second wireless terminal (104), and based upon typical loading requirements of the second wireless terminal;
wherein the wireless access points (102, 110, 114, 118, 120) are adapted to evaluate probable movement patterns of the second wireless terminal (104) as a part of making attachment decisions and as a part of assigning a transmission protocol for communication with the second wireless terminal (104).

2. The communication infrastructure of claim 1 wherein the historical information is used to produce a movement index that is used for handoff decisions.

3. A method in a wireless access point for controlling communications with a wireless terminal, comprising:
receiving (300) one of an attachment request or a beacon from the wireless terminal and attaching to the wireless terminal;
receiving (304) a position of the wireless terminal;
evaluating (308) a signal characteristic of a signal received from the wireless terminal;
storing (312) the position and the signal characteristic in a history of the wireless terminal; and
evaluating (316) the history of the wireless terminal and a current position of the wireless terminal to form a first conclusion to remain attached to the wireless terminal or to form a second conclusion to generate a communication signal to prompt the wireless terminal and a second wireless access point to attach to each other;
wherein the wireless access point assigns a transmission protocol based upon the history of the wireless terminal based upon movement information of the wireless terminal, and based upon typical loading requirements of the wireless terminal wherein the wireless access point evaluates probable movement patterns of the wireless terminal as a part of making attachment decisions and as a part of assigning a transmission protocol for communication with the wireless terminal.

4. The method of claim 3 further including transmitting at least a portion of the history of the wireless terminal to the second wireless access point.

5. The method of claim 3 further including receiving at least a portion the history of the wireless terminal from the second wireless access point.

## Patentansprüche

1. Kommunikationsinfrastruktur mit:
einem ersten Zugangspunkt (102), der einen ersten Upstream-Transceiver und einen ersten drahtlosen Downstream-Transceiver hat;
einem zweiten Zugangspunkt (110, 114, 118, 120), der einen zweiten Upstream-Transceiver und einen zweiten drahtlosen Downstream-Transceiver hat;
einer Vielzahl erster drahtloser Endgeräte, die jeweils positionsbezogene Informationen an den zweiten Zugangspunkt liefern;
wobei der zweite Zugangspunkt (110, 114, 118, 120) die gelieferten positionsbezogenen Informationen zusammen mit korrelierten Betriebsinformationen über den ersten Upstream-Transceiver und den zweiten Upstream-Transceiver an den ersten Zugangspunkt (102) kommuniziert; einem zweiten drahtlosen Endgerät (104), das weitere positionsbezogene Informationen an den ersten Zugangspunkt (102) liefert; und
wobei der erste Zugangspunkt (102) Betriebsinformationen, die zu dem zweiten drahtlosen Endgerät (104) gehören, mit den gelieferten korrelierten Betriebsinformationen vergleicht, die von dem zweiten Zugangspunkt (110, 114, 118, 120) kommuniziert werden, um eine Übergabe des zweiten drahtlosen Endgeräts (104) an einen anderen drahtlosen Zugangspunkt durchzuführen;
wobei die gelieferten Betriebsinformationen Bewegungsinformationen aufweisen, und wobei des Weiteren eine Entscheidung zum Durchführen von Übergabe teilweise auf den Bewegungsinformationen basiert;
wobei die Bewegungsinformationen historische Informationen aufweisen, die die Bindungshistorie des zweiten drahtlosen Endgeräts (104) in Bezug zur Dauer für jede Bindungsposition aufweisen;
wobei die drahtlosen Zugangspunkte (102, 110, 114) dazu ausgelegt sind, basierend auf der Historie des zweiten drahtlosen Endgeräts (104), basierend auf den Bewegungsinformationen des zweiten drahtlosen Endgeräts (104), und basierend auf typischen Ladungserfordernissen des zweiten drahtlosen Endgeräts ein Übertragungsprotokoll zuzuordnen;
wobei die drahtlosen Zugangspunkte (102, 110, 114, 118, 120) dazu ausgelegt sind, wahrscheinliche Bewegungsmuster des zweiten drahtlosen Endgeräts (104) als Teil des Treffens von Bindungsentscheidungen und als Teil des Zuordnens eines Übertragungsprotokolls zur Kommunikation mit dem zweiten drahtlosen Endgerät (104) auszuwerten.

2. Kommunikationsinfrastruktur nach Anspruch 1, wobei die historischen Informationen verwendet werden, um einen Bewegungsindex zu erzeugen, der für Übergabeentscheidungen verwendet wird.

3. Verfahren in einem drahtlosen Zugangspunkt zum Steuern von Kommunikationen mit einem drahtlosen Endgerät, das umfasst:
Empfangen (300) eines einer Bindungsanfrage oder eines Signals von dem drahtlosen Endgerät und Binden an das drahtlose Endgerät;
Empfangen (304) einer Position des drahtlosen Endgeräts;
Auswerten (308) einer Signaleigenschaft eines von dem drahtlosen Endgerät empfangenen Signals;
Speichern (312) der Position und der Signaleigenschaft in einer Historie des drahtlosen Endgeräts; und
Auswerten (316) der Historie des drahtlosen Endgeräts und einer aktuellen Position des drahtlosen Endgeräts, um einen ersten Entschluss zu bilden, an das drahtlose Endgerät gebunden zu bleiben, oder um einen zweiten Entschluss zu bilden, ein Kommunikationssignal zu erzeugen, um zu veranlassen, dass sich das drahtlose Endgerät und ein zweiter drahtloser Zugangspunkt miteinander verbinden;
wobei der drahtlose Zugangspunkt basierend auf der Historie des drahtlosen Endgeräts, basierend auf Bewegungsinformationen des drahtlosen Endgeräts, und basierend auf typischen Ladungserfordernissen des drahtlosen Endgeräts ein Übertragungsprotokoll zuordnet, wobei der drahtlose Zugangspunkt mögliche Bewegungsmuster des drahtlosen Endgeräts als Teil des Treffens von Bindungsentscheidungen und als Teil des Zuordnens eines Übertragungsprotokolls zur Kommunikation mit dem drahtlosen Endgerät auswertet.

4. Verfahren nach Anspruch 3, das des Weiteren das Übertragen wenigstens eines Teils der Historie des drahtlosen Endgeräts an den zweiten drahtlosen Zugangspunkt umfasst.

5. Verfahren nach Anspruch 3, das des Weiteren das Empfangen wenigstens eines Teils der Historie des drahtlosen Endgeräts von dem zweiten drahtlosen Zugangspunkt umfasst.

## Revendications

1. Infrastructure de communication comprenant :
un premier point d'accès (102) ayant un premier émetteur-récepteur amont et un premier émetteur-récepteur aval sans fil ;
un deuxième point d'accès (110, 114, 118, 120) ayant un deuxième émetteur-récepteur amont et un deuxième émetteur-récepteur aval sans fil ;
une pluralité de premiers terminaux sans fil qui fournissent chacun une information relative à la position au deuxième point d'accès ;
le deuxième point d'accès (110, 114, 118, 120) communique l'information relative à la position fournie en même temps qu'une information opérationnelle corrélée au premier point d'accès (102) par l'intermédiaire du premier émetteur-récepteur amont et du deuxième émetteur-récepteur amont ;
un deuxième terminal sans fil (104) qui fournit une autre information relative à la position au premier point d'accès (102) ; et
le premier point d'accès (102) compare une information opérationnelle associée avec le deuxième terminal sans fil (104) avec l'information opérationnelle corrélée fournie communiquée du deuxième point d'accès (110, 114, 118, 120) pour exécuter un transfert intercellulaire du deuxième terminal sans fil (104) sur un autre point d'accès sans fil ;
dans laquelle l'information opérationnelle fournie inclut une information de mouvement et en outre dans laquelle une décision d'exécution de transfert intercellulaire est basée en partie sur l'information de mouvement ;
dans laquelle l'information de mouvement inclut une information historique qui inclut un historique de rattachement du deuxième terminal sans fil (104) en relation à une durée pour chaque position de rattachement ;
dans laquelle les points d'accès sans fil (102, 110, 114) sont adaptés à affecter un protocole de transmission sur la base de l'historique du deuxième terminal sans fil (104) sur la base d'une information de mouvement du deuxième terminal sans fil (104), et sur la base d'exigences de charge typiques du deuxième terminal sans fil ;
dans laquelle les points d'accès sans fil (102, 110, 114, 118, 120) sont adaptés à évaluer des schémas de mouvement probables du deuxième terminal sans fil (104) comme une partie de prise de décisions de rattachement et comme une partie d'affectation d'un protocole de transmission pour une communication avec le deuxième terminal sans fil (104).

2. Infrastructure de communication selon la revendication 1, dans laquelle l'information historique est utilisée pour produire un index de mouvements qui est utilisé pour des décisions de transfert intercellulaire.

3. Procédé dans un point d'accès sans fil pour commander des communications avec un terminal sans fil, comprenant :
la réception (300) d'une parmi une demande de rattachement ou une balise du terminal sans fil et le rattachement au terminal sans fil ;
la réception (304) d'une position du terminal sans fil ;
l'évaluation (308) d'une caractéristique de signal d'un signal reçu du terminal sans fil ;
le stockage (312) de la position et de la caractéristique de signal dans un historique du terminal sans fil ; et
l'évaluation (316) de l'historique du terminal sans fil et d'une position courante du terminal sans fil pour former une première conclusion de rester rattaché au terminal sans fil ou pour former une deuxième conclusion de générer un signal de communication pour indiquer au terminal sans fil et à un deuxième point d'accès sans fil de se rattacher l'un à l'autre ;
dans lequel le point d'accès sans fil affecte un protocole de transmission sur la base de l'historique du terminal sans fil sur la base d'une information de mouvement du terminal sans fil, et sur la base d'exigences de charge typiques du terminal sans fil dans lequel le point d'accès sans fil évalue des schémas de mouvement probables du terminal sans fil comme une partie de prise de décisions de rattachement et comme une partie d'affectation d'un protocole de transmission pour une communication avec le terminal sans fil.

4. Procédé selon la revendication 3, incluant en outre la transmission d'au moins une partie de l'historique du terminal sans fil au deuxième point d'accès sans fil.

5. Procédé selon la revendication 3, incluant en outre la réception d'au moins une partie de l'historique du terminal sans fil du deuxième point d'accès sans fil.
